# EUROPEAN PATENT SPECIFICATION

(11) **EP 0 774 203 B1**
(45) Date of publication and mention of the grant of the patent: **27.06.2001**
(21) Application number: 96203145.6
(22) Date of filing: 11.11.1996
(51) Int. Cl.: A01J 5/017

(54) **A construction including an implement for milking animals**
Konstruktion mit einem Gerät zum Melken von Tieren
Construction comprenant un dispositif pour la traite d'animaux

(30) Priority: 14.11.1995 NL 1001646
(43) Date of publication of application: 21.05.1997
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- EP-A- 0 534 564
- EP-A- 0 551 959
- WO-A-96/17509

## Description

The invention relates to a construction including an implement for milking animals, provided with one or more milking parlours where an animal can be milked, said implement comprising a sensor, which supplies a signal when a teat cup, e.g. because it is kicked off from a teat, gets out of order.

The invention further relates to a construction including an implement for milking animals, provided with one or more milking parlours where an animal can be milked, said implement comprising a sensor, which supplies a signal when a teat cup, e.g. because it is kicked off from a teat, gets out of order, said teat cup being detachably disposed on a carrier, said sensor being provided at the place where the teat cup is carried or near thereto.

The invention also relates to a construction including an implement for milking animals, provided with one or more milking parlours where an animal can be milked, said implement comprising a sensor, which supplies a signal when a teat cup, e.g. because it is kicked off from a teat, gets out of order, said teat cup being detachably disposed on a carrier, said sensor being provided at the place where the teat cup is carried or near thereto.

Such constructions are known from the International patent application WO 96/17509 which forms prior art under Art. 54(3) EPC. The construction as described in WO 96/17509 comprises a milking machine having a milking line connected to the teat cups and having an air suction line running with one end into the teat cup or into a milking line. A sensor is incorporated in the air suction line for the purpose of ascertaining the air pressure. When the teat cup is kicked off from the teat by the animal this can be detected by the air pressure sensor.

The present invention provides constructions which are different from the one described in WO 96/17509, while still maintaining the possibility of supplying a signal when a teat cup, e.g. because it is kicked off from a teat, gets out of order.

According to a first aspect the invention relates to a construction including an implement for milking animals, provided with one or more milking parlours where an animal can be milked, said implement comprising a sensor, which supplies a signal when a teat cup, e.g. because it is kicked off from a teat, gets out of order, characterized in that the sensor is provided on the teat cup. In this manner the operating person can verify, on the basis of computer data, whether a teat cup has got out of order. Preferably, the sensor is constituted by a mercury switch. Said mercury switch is preferably disposed on the casing of a teat cup and supplies a signal as soon as the teat cup is pivoted over a pre-fixed angle of e.g. minimum 45° relative to its inoperative position on the carrier. Pivoting of the teat cup over a suchlike angle usually implies that the teat cup has been kicked off or has fallen off and, as a result, is threatened to fall on the floor. Upon receiving a signal from the sensor provided on the teat cup, the computer supplies a signal to the withdrawing member, in order that the relevant teat cup is withdrawn to the carrier as quickly as possible and thus is prevented from falling onto the floor.

According to a second aspect the invention relates to a construction including an implement for milking animals, provided with one or more milking parlours where an animal can be milked, said implement comprising a sensor, which supplies a signal when a teat cup, e.g. because it is kicked off from a teat, gets out of order, said teat cup being detachably disposed on a carrier, said sensor being provided at the place where the teat cup is carried or near thereto, characterized in that the sensor is disposed near a withdrawing member, by means of which the teat cup can be drawn towards the carrier, and the sensor supplies a signal to a computer when the withdrawing member has entirely withdrawn. In this manner the operating person can verify, on the basis of computer data, whether a teat cup has got out of order. When, after a pre-fixed period of time, the sensor supplies no signal after the computer has supplied a signal to the withdrawing member to withdraw the teat cup, the computer ascertains that the relevant teat cup has not been withdrawn onto the carrier and consequently has got out of order. According to a further inventive aspect, the withdrawing member comprises a flexible element, such as a cord, which is connected with one end with a teat cup and with the other end with a withdrawing element, such as a cylinder. According to a further inventive feature, the sensor is activated by the end of a piston rod of the cylinder of the withdrawing member. When a teat cup is withdrawn onto the carrier in a proper manner, the sensor supplies a signal indicating that the withdrawal has been carried out correctly. When the end of the piston rod does not activate the sensor, this means that the relevant teat cup has not returned to the carrier and consequently has got out of order. According to a further inventive feature, the sensor is constituted by a micro-switch. By means of the sensor on the carrier and/or the sensor near the piston rod, it can be verified whether the withdrawal of the teat cup has been carried out correctly.

According to a third aspect the invention relates to a construction including an implement for milking animals, provided with one or more milking parlours where an animal can be milked, said implement comprising a sensor, which supplies a signal when a teat cup, e.g. because it is kicked off from a teat, gets out of order, said teat cup being detachably disposed on a carrier, said sensor being provided at the place where the teat cup is carried or near thereto, characterized in that the sensor is disposed in a conical seat of the carrier, and the bottom side of the teat cup is conical so as to correspond to the seat. In this manner the operating person can verify, on the basis of computer data, whether a teat cup has got out of order. When the teat cup has accidentally got out of the conical seat and/or has not returned thereto, this is ascertained by means of the sensor and a computer, whereafter it can be pointed out to an operating person that the relevant teat cup has got out of order.

In accordance with again a further inventive feature, the implement comprises a vacuum sensor capable of determining the vacuum in the vacuum line of the teat cup and which supplies a signal to the computer when a teat cup is disconnected from a teat, whereafter the computer supplies a signal to the shutting off means which shut off the vacuum line, in order that the vacuum in the teat cup is removed. The aforementioned sensors are in particular advantageously applicable in an automatic milking implement including a milking robot. According to a further inventive feature, the implement comprises a milking robot, by means of which teat cups can automatically be connected from the carrier to the teats of an animal to be milked, respectively be disconnected therefrom, and be brought back to the carrier by means of the withdrawing member.

For a better understanding of the invention and to show how the same may be carried into effect, reference will now be made, by way of example, to the accompanying drawings, in which:
Figure 1 shows in plan view an implement for milking animals, provided with a milk box, a milking robot and a collecting member for the dung;
Figure 2 is a side view of the implement shown in Figure 1;
Figure 3 is a rear view of the implement shown in Figures 1 and 2;
Figure 4 shows a detail of a milking robot according to Figure 1;
Figure 5 is a cross-sectional view of the robot arm taken on the line V - V in Figure 4, and
Figure 6 is a cross-sectional view of the robot arm according to the line VI - VI in Figure 4.

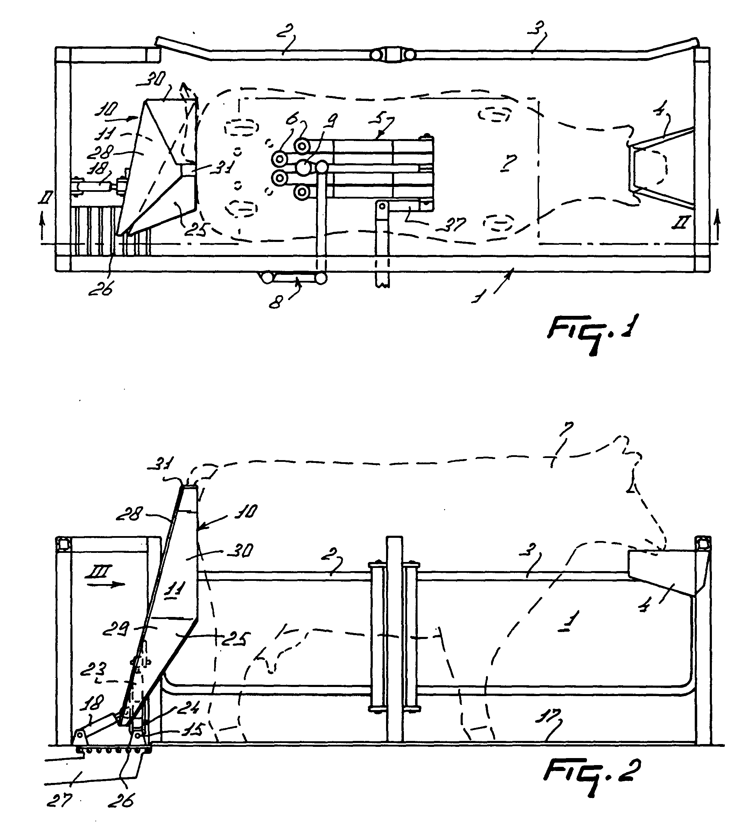

Figure 1 shows in plan view an implement for milking animals, including a milk box 1 provided with an entrance door 2, an exit door 3 and a feed trough 4. At the opposite sides of the entrance door 2 and the exit door 3, beside the fencing of the milk box 1, there is arranged a milking robot 5, by means of which teat cups 6 can automatically be connected to the teats of an animal 7, respectively be disconnected therefrom.

As shown in Figure 1, beside the milking robot 5 there is further arranged a second robot arm 8 provided at its end with a detector 9, by means of which the position of the teats of an animal to be milked can be determined. In the present embodiment, the detector 9 is designed as a laser making a scanning movement in a horizontal plane. Of course it is also possible to apply an other type of detector, such as an ultrasonographic sensor. The milking robot 5 and the second robot arm 8 can be active independently of each other.

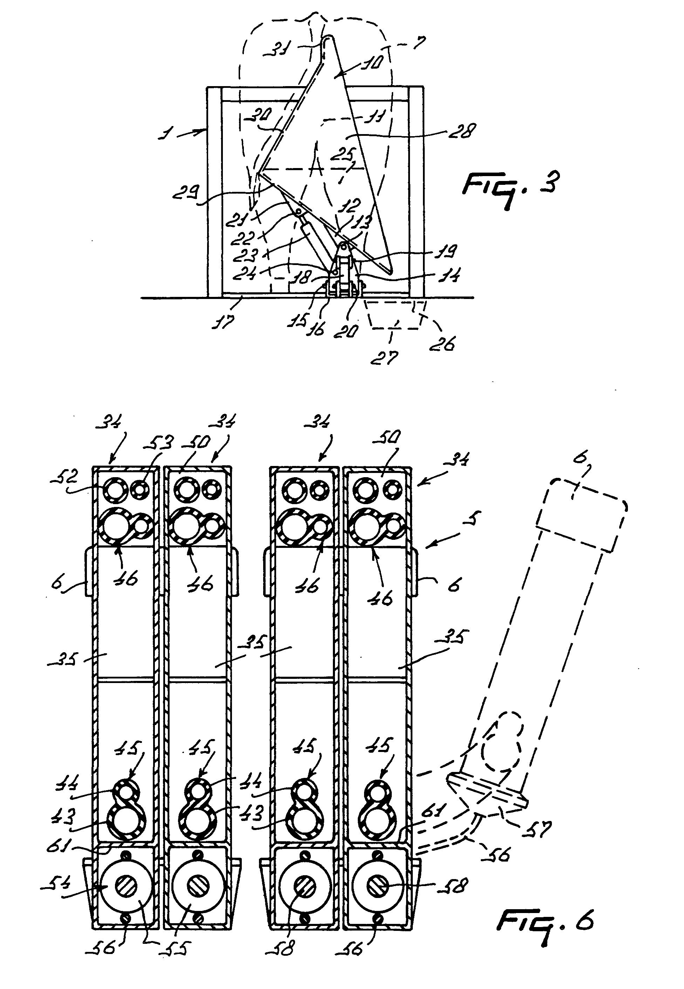

Near the rear side of the milk box 1 there is further disposed a collecting member 10 for collecting the dung of the animal 7 (Figure 3). The collecting member 10 comprises a gutterlike housing 11 which, near its lower side, is provided with a lug 12 which is pivotably connected about a horizontal shaft 13 with a second lug 14. Thereby the first horizontal shaft 13 extends in the longitudinal direction of the milk box 1. The second lug 14 is further pivotable about a second horizontal shaft 15, which is disposed in a U-shaped profile 16 transversely to the longitudinal direction of the milk box 1. The U-shaped profile 16 is fastened on the floor 17 of the milk box 1. Between the floor 17 and the second lug 14 there is further disposed a first cylinder 18 extending in the longitudinal direction of the milk box 1. One end of the first cylinder 18 is pivotably connected with the second lug 14 about a third horizontal shaft 19 and the other end thereof is pivotably connected with the floor 17 about a fourth horizontal shaft 20. The third horizontal shaft 19 and the fourth horizontal shaft 20 both extend transversely to the longitudinal direction of the milk box 1 and are both disposed in U-shaped profiles.

To the gutterlike housing 11 there is fitted a third lug 21 to which, pivotably about a fifth horizontal shaft 22 extending in the longitudinal direction of the milk box 1, there is attached a second cylinder 23. With its other end, the second cylinder 23 is connected, pivotably about a sixth horizontal shaft 24, also extending in the longitudinal direction of the milk box 1, with the second lug 14.

By means of the first cylinder 18, the collecting member 10 can be pivoted about the second horizontal shaft 15 in the longitudinal direction of the milk box 1 and, by means of the second cylinder 23, the collecting member 10 can be pivoted about the first horizontal shaft 13 in the transverse direction of the milk box 1.

The gutterlike housing 11 comprises a triangular bottom 25 made of a plate, one point of which extends obliquely downwards from the cow. Thereby said point of the triangular bottom 25 debouches over a grid floor 26 provided in the right rear angle of the milk box 1. Under the grid floor 26 there is located a dung discharge gutter 27 connected to a (non-shown) dung cellar. The horizontally extending upper edge of the triangular bottom 25 extends transversely to the milk box 1 and is situated at a height of approximately 1.25 m. The gutterlike housing 11 furthermore comprises, seen in rear view, a quadrangular back wall 28 made of a plate. Seen in rear view, the first side 29 of the back wall 28 includes an angle of approximately 140° with the horizontal line and the further side 30 includes an angle of approximately 90° with the first side 29. The further side 30 comprises near its upper end a bent part 31 including an angle of approximately 30° with the other part of the further side 30.

The collecting member 10 is additionally provided with a (non-shown) cow tracking device, by means of which the milking robot 5 can be post-controlled when the animal 7 moves in the longitudinal direction of the milk box 1.

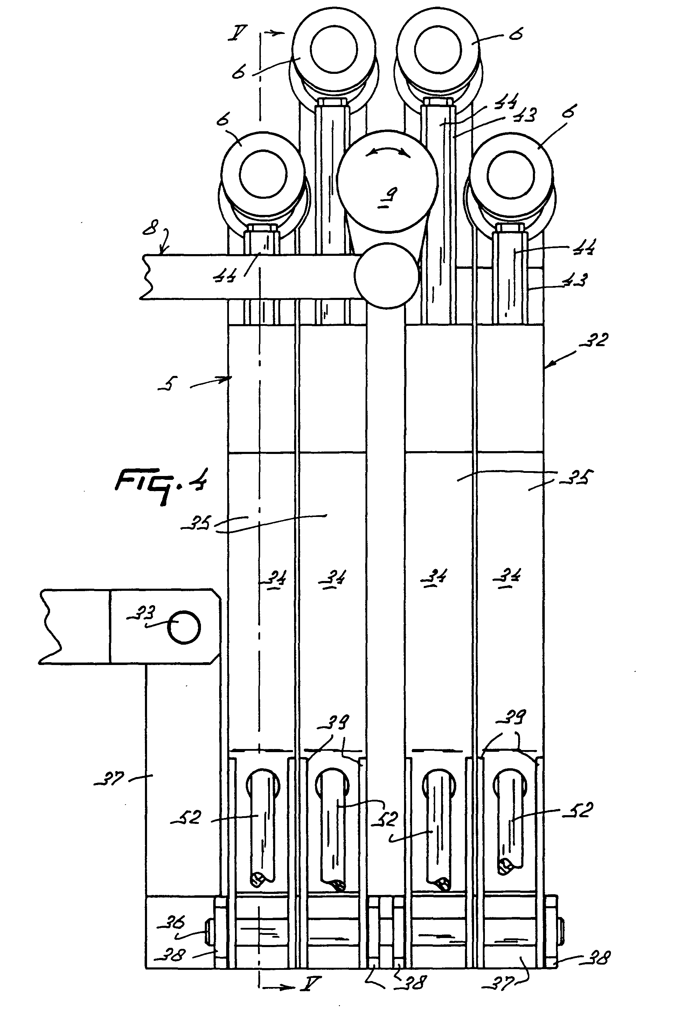

In Figures 4 to 6, the end of the milking robot 5 is shown in detail. The teat cups 6 rest on a carrier 32 which is pivotable about a vertical shaft 33. The carrier 32 comprises four juxtaposed units 34 each carrying near an end a teat cup 6. The units 34 each comprise a boxlike housing 35, which is pivotable about a horizontal shaft 36. By means of two juxtaposed U-profiles 38, the horizontal shaft 36 is disposed on an L-shaped box girder 37 of the milking robot 5. The unit 35 is provided with two lugs 39 which are pivotably disposed about the horizontal shaft 36. Each of the units 34 is individually pivotable about the horizontal shaft 36 by means of a cylinder 40. The cylinder 40 is connected with one end, by means of lugs 41, with the L-shaped box girder 37 and, with the other end, by means of lugs 42, with the boxlike housing 35. The cylinder 40 may also be designed as a step motor.

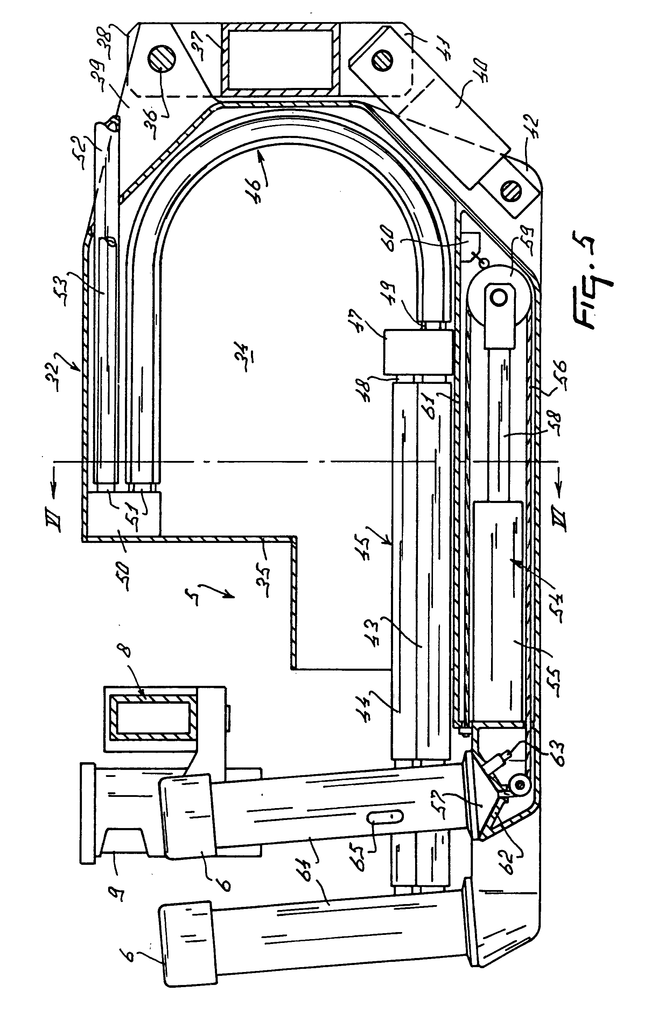

In the boxlike housings 35 the milk tubes 43 and the pulsation tubes 44 of the teat cups 6 are accommodated. When the teat cups 6 rest on the carrier 32, the milk tubes and pulsation tubes 43, 44 are located approximately in a circular loop in the boxlike housings 35 (Figure 5). A first part 45 of the milk tubes and pulsation tubes 43, 44 extends from a teat cup 6 in a vertical plane and a second part 46 of the tubes comprises a loop-shaped part 46 located in the vertical plane. The first and second part 45, 46 respectively of the tubes 43, 44 are connected to each other by means of a coupling block 47. The first part 45 of the tubes is connected to connecting nipples 48, which are arranged one below the other at one side of the coupling block 47, whereas the second part 46 of the tubes is connected to connecting nipples 49, which are disposed next to each other at the other side of the coupling block 47. By means of the coupling block 47, there is obtained a kink-free connection between the first part 45, where the tubes are located above each other, and the second part 46, where the tubes are located next to each other. Both in the first and second part 45, 46 of the tubes the jackets of the milk tubes and pulsation tubes 43, 44 are interconnected. Furthermore, the jacket of the first part 45 of the tubes is made of a relatively rigid material, so that the teat cup 6 is prevented from falling down too easily. On the other hand, the second part 46 of the tubes 43, 44 is made of a relatively flexible material. As a result, the units 34, without meeting with too much resistance of the tubes 43, 44, can be moved upwards without kinks being produced. The other end of the second part 46 of the tubes is connected with a second coupling block 50, which is provided with two pairs of superposed connecting nipples 51, to which, on the one hand, the end of the second part 46 of the tubes is connected and, on the other hand, a pipelike milk line 52 and a pipelike pulsation line 53 are connected (Figures 5, 6). By means of the second coupling block 50, disposed in the left upper part of the boxlike housing 35, there is obtained a diversion of 180° for the milk-pulsation tube 43, 44. Like the second part 46 of the tubes, the pipelike milk line and the pipelike pulsation line 53 are situated next to each other.

In the lower side of each boxlike housing 35 there is moreover disposed a withdrawing member 54, by means of which the teat cups 6 can be withdrawn towards the carrier 32. The withdrawing member 54 comprises a cylinder 55, arranged in the lower part of the boxlike housing 35. The withdrawing member 54 is additionally provided with a cord 56 which is connected with one end with the boxlike housing 35 and with the other end with a conical bottom side 57 of the teat cup 6. The cord 56 is further guided over a wheel 59 that is rotatably disposed at the end of the piston rod 58 of the cylinder 55. In the situation shown in Figure 5, the piston rod 58 is entirely pulled out, whereby the wheel 59 touches a sensor 60, designed as a switch, which is disposed against a wall 61 of the boxlike housing 35. By means of the switch 60 there can be recorded whether the cord 56 is entirely stretched so that the teat cup 6 rests on the carrier 32 in a proper manner. When the teat cup 6 rests on the carrier 32, the switch 60 supplies a signal to the computer. When, after a fixed period of time after the cylinder 55 has been activated, no signal is supplied by the switch 60, the cylinder 55 is activated again and, when again no signal is supplied by the switch 60, the computer will give an error message which, by means of e.g. a radiophone, is passed on to an operating person.

Each of the carriers 32 is provided near its end with a conical seat 62 corresponding to the conical bottom side 57 of the teat cup 6. Thereby the conical seat 62 is disposed in the carrier 32 in such a way that, when the lower end of the carrier 32 is located in a horizontal plane, a teat cup 6 put on the conical seat 62 takes a somewhat forwardly inclined position. The angle at which the teat cup 6 is positioned relative to the vertical line lies approximately between 3° and 10° and is preferably 5°. When the teat cup 6 is pivoted about the shaft 36 by means of the cylinder 40 in order to be connected to the teat of an animal to be milked, said teat cup 6 will take a substantially vertical position during pivoting. In this manner it is possible to connect a teat cup 6 to the teat of an animal to be milked by simply pivoting the unit 32.

For the purpose of verifying whether, by activating the withdrawing member 54, a teat cup 6 is put in the conical seat 62 in a proper manner, there is fitted in the conical seat 62 a sensor 63 recording whether the conical bottom side 57 of the teat cup 6 is correctly put in the conical seat 62. The sensor 63 may thereby be designed as a micro-switch or a conductivity sensor. After the computer has supplied a signal to the withdrawing member 54 to withdraw the teat cup 6 onto the carrier, the computer verifies whether, after a pre-fixed period of time, there is supplied a signal by the sensor 63. When no signal is supplied, it is possible, as described above, to draw the attention of the operating person thereto by means of the computer.

On the outer casing 64 of the teat cup 6 there is provided a sensor 65, supplying a signal to the (non-shown) computer concerning the angle at which the teat cup 6 is positioned relative to the vertical line. The sensor 65 may thereby be designed as a clinometer or a simple mercury switch. When the teat cup 6 has been pivoted over a pre-set angle, of e.g. 45°, relative to the vertical line, the vacuum in the teat cup is automatically removed by the computer and the withdrawing member 54 is automatically activated in order to withdraw the teat cup 6 onto the conical seat 62, so that the teat cup 6 is prevented from falling onto the floor and becoming dirty. When the teat cup 6, after activating the withdrawing member 54, does not return to the seat 62 after a pre-fixed period of time, which is ascertained by the sensor 60 and/or the sensor 63, this is pointed out to the operating person in the above-described manner. In an implement of the above-mentioned type, the aforementioned sensors 60, 63 and 65 can be applied individually as well as in combination with each other.

## Claims

1. A construction including an implement for milking animals, provided with one or more milking parlours where an animal can be milked, said implement comprising a sensor (65), which supplies a signal when a teat cup (6), e.g. because it is kicked off from a teat, gets out of order, the sensor (65) being provided on the teat cup (6).

2. A construction as claimed in claim 1, characterized in that the teat cup (6) is detachably disposed on a carrier (32), and the sensor (65) is provided at the place where the teat cup (6) is carried or near thereto.

3. A construction as claimed in claim 1 or 2, characterized in that a second sensor (63) is disposed in a conical seat (62) of the carrier (32), and the bottom side of the teat cup (6) is conical so as to correspond to the seat (62).

4. A construction as claimed in any one of the preceding claims, characterized in that a third sensor (60) is disposed near a withdrawing member (54), by means of which the teat cup (6) can be drawn towards the carrier (32), and the third sensor (60) supplies a signal to a computer when the withdrawing member (54) has entirely withdrawn.

5. A construction as claimed in claim 4, characterized in that the withdrawing member (54) comprises a flexible element (56), such as a cord, which is connected with one end with a teat cup (6) and with the other end with a withdrawing element (55), such as a cylinder.

6. A construction as claimed in claim 4 or 5, characterized in that the third sensor (60) is activated by the end of the piston rod (58) of the cylinder (55) of the withdrawing member (54).

7. A construction as claimed in any one of the preceding claims 4 through 6, characterized in that the third sensor (60) is constituted by a micro-switch.

8. A construction as claimed in any one of the preceding claims, characterized in that the sensor (65) is constituted by a mercury switch.

9. A construction including an implement for milking animals, provided with one or more milking parlours where an animal can be milked, said implement comprising a sensor (60), which supplies a signal when a teat cup (6), e.g. because it is kicked off from a teat, gets out of order, said teat cup (6) being detachably disposed on a carrier (32), said sensor (60) being provided at the place where the teat cup (6) is carried or near thereto, the sensor (60) being disposed near a withdrawing member (54), by means of which the teat cup (6) can be drawn towards the carrier (32), and the sensor (60) supplies a signal to a computer when the withdrawing member (54) has entirely withdrawn.

10. A construction as claimed in claim 9, characterized in that a second sensor (63) is disposed in a conical seat (62) of the carrier (32), and the bottom side of the teat cup (6) is conical so as to correspond to the seat (62).

11. A construction as claimed in claim 9 or 10, characterized in that the withdrawing member (54) comprises a flexible element (56), such as a cord, which is connected with one end with a teat cup (6) and with the other end with a withdrawing element (55), such as a cylinder.

12. A construction as claimed in claim 9, 10 or 11, characterized in that the sensor (60) is activated by the end of the piston rod (58) of the cylinder (55) of the withdrawing member (54).

13. A construction as claimed in any one of the preceding claims 9 through 12, characterized in that the sensor (60) is constituted by a micro-switch.

14. A construction as claimed in any one of the preceding claims 9 through 13, characterized in that a third sensor (65) is provided on the teat cup (6).

15. A construction as claimed in claim 14, characterized in that the sensor (65) is constituted by a mercury switch.

16. A construction including an implement for milking animals, provided with one or more milking parlours where an animal can be milked, said implement comprising a sensor (63), which supplies a signal when a teat cup (6), e.g. because it is kicked off from a teat, gets out of order, said teat cup (6) being detachably disposed on a carrier (32), said sensor (60) being provided at the place where the teat cup (6) is carried or near thereto, the sensor (63) being disposed in a conical seat (62) of the carrier (32), and the bottom side of the teat cup (6) is conical so as to correspond to the seat (62).

17. A construction as claimed in claim 16, characterized in that a second sensor (60) is disposed near a withdrawing member (54), by means of which the teat cup (6) can be drawn towards the carrier (32), and the second sensor (60) supplies a signal to a computer when the withdrawing member (54) has entirely withdrawn.

18. A construction as claimed in claim 17, characterized in that the withdrawing member (54) comprises a flexible element (56), such as a cord, which is connected with one end with a teat cup (6) and with the other end with a withdrawing element (55), such as a cylinder.

19. A construction as claimed in claim 17 or 18, characterized in that the second sensor (60) is activated by the end of the piston rod (58) of the cylinder (55) of the withdrawing member (54).

20. A construction as claimed in any one of the preceding claims 17 through 19, characterized in that the sensor (60) is constituted by a micro-switch.

21. A construction as claimed in any one of the preceding claims 16 through 20, characterized in that a third sensor (65) is provided on the teat cup.

22. A construction as claimed in claim 21, characterized in that the sensor (65) is constituted by a mercury switch.

23. A construction as claimed in any one of the preceding claims, characterized in that the implement comprises a vacuum sensor capable of determining the vacuum in the vacuum line of the teat cup (6) and which supplies a signal to the computer when a teat cup (6) is disconnected from a teat, whereafter the computer supplies a signal to the shutting off means which shut off the vacuum line, in order that the vacuum in the teat cup (6) is removed.

24. A construction as claimed in any one of the preceding claims, characterized in that the implement comprises a milking robot (5), by means of which the teat cups (6) can automatically be connected from the carrier (32) to the teats of an animal to be milked, respectively be disconnected therefrom, and be brought back to the carrier (32) by means of the withdrawing member (54).

## Patentansprüche

1. Anlage mit einer Vorrichtung zum Melken von Tieren, die mit einem oder mehreren Melkständen versehen ist, wo ein Tier gemolken werden kann, wobei die Vorrichtung einen Sensor (65) umfaßt, der ein Signal liefert, wenn ein Zitzenbecher (6), z. B. weil er von einer Zitze weggetreten wird, außer Betrieb gesetzt wird, wobei der Sensor (65) an dem Zitzenbecher (6) angebracht ist.

2. Anlage nach Anspruch 1,
dadurch gekennzeichnet, daß der Zitzenbecher (6) lösbar an einem Träger (32) angebracht und der Sensor (65) an oder nahe der Stelle angeordnet ist, an der der Zitzenbecher (6) getragen wird.

3. Anlage nach Anspruch 1 oder 2,
dadurch gekennzeichnet, daß ein zweiter Sensor (63) in einem konischen Sitz (62) des Trägers (32) angeordnet und die Unterseite des Zitzenbechers (6) konisch ausgebildet ist, so daß sie dem Sitz (62) entspricht.

4. Anlage nach einem der vorhergehenden Ansprüche,
dadurch gekennzeichnet, daß ein dritter Sensor (60) nahe einem Rückziehglied (54) angeordnet ist, mittels dessen der Zitzenbecher (6) an den Träger (32) herangezogen werden kann, und daß der dritte Sensor (60) ein Signal an einen Computer gibt, wenn das Rückziehglied (54) vollständig zurückgezogen ist.

5. Anlage nach Anspruch 4,
dadurch gekennzeichnet, daß das Rückziehglied (54) ein flexibles Element (56), wie z. B. eine Schnur, umfaßt, die an einem Ende mit einem Zitzenbecher (6) und am anderen Ende mit einem Rückziehelement (55), wie z. B. einem Zylinder, verbunden ist.

6. Anlage nach Anspruch 4 oder 5,
dadurch gekennzeichnet, daß der dritte Sensor (60) von dem Ende der Kolbenstange (58) des Zylinders (55) des Rückziehgliedes (54) aktiviert wird.

7. Anlage nach einem der vorhergehenden Ansprüche 4 bis 6,
dadurch gekennzeichnet, daß der dritte Sensor (60) durch einen Mikroschalter gebildet ist.

8. Anlage nach einem der vorhergehenden Ansprüche,
dadurch gekennzeichnet, daß der Sensor (65) durch einen Quecksilber-Schalter gebildet ist.

9. Anlage mit einer Vorrichtung zum Melken von Tieren, die mit einem oder mehreren Melkständen versehen ist, wo ein Tier gemolken werden kann, wobei die Vorrichtung einen Sensor (60) umfaßt, der ein Signal liefert, wenn ein Zitzenbecher (6), z. B. weil er von einer Zitze weggetreten wird, außer Betrieb gesetzt wird, wobei der Zitzenbecher (6) lösbar an einem Träger (32) angebracht ist, wobei der Sensor (60) an oder nahe der Stelle angeordnet ist, an der der Zitzenbecher (6) getragen wird, wobei der Sensor (60) nahe einem Rückziehglied (54) angeordnet ist, mittels dessen der Zitzenbecher (6) an den Träger (32) herangezogen werden kann, und der Sensor (60) ein Signal an einen Computer gibt, wenn das Rückziehglied (54) vollständig zurückgezogen ist.

10. Anlage nach Anspruch 9,
dadurch gekennzeichnet, daß ein zweiter Sensor (63) in einem konischen Sitz (62) des Trägers (32) angeordnet und die Unterseite des Zitzenbechers (6) konisch ausgebildet ist, so daß sie dem Sitz (62) entspricht.

11. Anlage nach Anspruch 9 oder 10,
dadurch gekennzeichnet, daß das Rückziehglied (54) ein flexibles Element (56), wie z. B. eine Schnur umfaßt, die an einem Ende mit einem Zitzenbecher (6) und am anderen Ende mit einem Rückziehelement (55), wie z. B. einem Zylinder, verbunden ist.

12. Anlage nach Anspruch 9, 10 oder 11,
dadurch gekennzeichnet, daß der Sensor (60) von dem Ende der Kolbenstange (58) des Zylinders (55) des Rückziehgliedes (54) aktiviert wird.

13. Anlage nach einem der vorhergehenden Ansprüche 9 bis 12,
dadurch gekennzeichnet, daß der Sensor (60) durch einen Mikroschalter gebildet ist.

14. Anlage nach einem der vorhergehenden Ansprüche 9 bis 13,
dadurch gekennzeichnet, daß ein dritter Sensor (65) an dem Zitzenbecher (6) angeordnet ist.

15. Anlage nach Anspruch 14,
dadurch gekennzeichnet, daß der Sensor (65) durch einen Quecksilber-Schalter gebildet ist.

16. Anlage mit einer Vorrichtung zum Melken von Tieren, die mit einem oder mehreren Melkständen versehen ist, wo ein Tier gemolken werden kann, wobei die Vorrichtung einen Sensor (63) umfaßt, der ein Signal liefert, wenn ein Zitzenbecher (6), z. B. weil er von einer Zitze weggetreten wird, außer Betrieb gesetzt wird, wobei der Zitzenbecher (6) lösbar an einem Träger (32) angebracht ist, wobei der Sensor (60) an oder nahe der Stelle angeordnet ist, an der der Zitzenbecher (6) getragen wird, wobei der Sensor (63) in einem konischen Sitz (62) des Trägers (32) angeordnet und die Unterseite des Zitzenbechers (6) konisch ausgebildet ist, so daß sie dem Sitz (62) entspricht.

17. Anlage nach Anspruch 16,
dadurch gekennzeichnet, daß ein zweiter Sensor (60) nahe einem Rückziehglied (54) angeordnet ist, mittels dessen der Zitzenbecher (6) an den Träger (32) herangezogen werden kann, und daß der zweite Sensor (60) ein Signal an einen Computer gibt, wenn das Rückziehglied (54) vollständig zurückgezogen ist.

18. Anlage nach Anspruch 17,
dadurch gekennzeichnet, daß das Rückziehglied (54) ein flexibles Element (56), wie z. B. eine Schnur, umfaßt, die an einem Ende mit einem Zitzenbecher (6) und am anderen Ende mit einem Rückziehelement (55), wie z. B. einem Zylinder, verbunden ist.

19. Anlage nach Anspruch 17 oder 18,
dadurch gekennzeichnet, daß der zweite Sensor (60) von dem Ende der Kolbenstange (58) des Zylinders (55) des Rückziehgliedes (54) aktiviert wird.

20. Anlage nach einem der vorhergehenden Ansprüche 17 bis 19,
dadurch gekennzeichnet, daß der Sensor (60) durch einen Mikroschalter gebildet ist.

21. Anlage nach einem der vorhergehenden Ansprüche 16 bis 20,
dadurch gekennzeichnet, daß ein dritter Sensor (65) an dem Zitzenbecher angeordnet ist.

22. Anlage nach Anspruch 21,
dadurch gekennzeichnet, daß der Sensor (65) durch einen Quecksilber-Schalter gebildet ist.

23. Anlage nach einem der vorhergehenden Ansprüche,
dadurch gekennzeichnet, daß die Vorrichtung einen Vakuumsensor umfaßt, der das Vakuum in der Vakuumleitung des Zitzenbechers (6) feststellen kann und ein Signal an den Computer gibt, wenn ein Zitzenbecher (6) von einer Zitze abgekoppelt wird, worauf der Computer ein Signal an die Verschlußvorrichtung gibt, die die Vakuumleitung verschließt, um das Vakuum in dem Zitzenbecher (6) zu beseitigen.

24. Anlage nach einem der vorhergehenden Ansprüche,
dadurch gekennzeichnet, daß die Vorrichtung einen Melkroboter (5) umfaßt, mittels dessen die Zitzenbecher (6) automatisch von dem Träger (32) an die Zitzen eines zu melkenden Tieres angeschlossen bzw. von diesen abgenommen und mit Hilfe des Rückziehgliedes (54) zu dem Träger (32) zurückgebracht werden können.

## Revendications

1. Installation comportant un système de traite d'animaux, muni d'un ou de plusieurs box de traite où un animal peut être trait, ledit système comportant un capteur (65), qui envoie un signal lorsqu'un gobelet trayeur (6) est hors service, par exemple de par le fait qu'il a été enlevé d'un trayon par un coup de pied, le capteur (65) étant agencé sur le gobelet trayeur (6).

2. Installation selon la revendication 1, caractérisée en ce que le gobelet trayeur (6) est disposé de manière amovible sur un support (32), et le capteur (65) est agencé à l'emplacement où le gobelet trayeur (6) est supporté, ou à proximité de celui-ci.

3. Installation selon la revendication 1 ou 2, caractérisée en ce qu'un deuxième capteur (63) est disposé dans un siège conique (62) du support (32), et le côté de fond du gobelet trayeur (6) est conique, de manière à correspondre au siège (62).

4. Installation selon l'une quelconque des revendications précédentes, caractérisée en ce qu'un troisième capteur (60) est disposé à proximité d'un élément de retrait (54), par l'intermédiaire duquel le gobelet trayeur peut être tiré en direction du support (32), et le troisième capteur (60) envoie un signal vers un ordinateur lorsque l'élément de retrait (54) a entièrement effectué un retrait.

5. Installation selon la revendication 4, caractérisée en ce que l'élément de retrait (54) comporte un élément souple (56), tel qu'une corde, qui est connecté au niveau d'une première extrémité à un gobelet trayeur (6), et au niveau de l'autre extrémité à un élément de retrait (55), tel qu'un vérin.

6. Installation selon la revendication 4 ou 5, caractérisée en ce que le troisième capteur (60) est actionné par l'extrémité de la tige de piston (58) du vérin (55) de l'élément de retrait (54).

7. Installation selon l'une quelconque des revendications 4 à 6, caractérisée en ce que le troisième capteur (60) est constitué d'un micro-commutateur.

8. Installation selon l'une quelconque des revendications précédentes, caractérisée en ce que le capteur (65) est constitué d'un commutateur à mercure.

9. Installation comportant un système de traite d'animaux, muni d'un ou de plusieurs box de traite où un animal peut être trait, ledit système comportant un capteur (60) qui envoie un signal lorsqu'un gobelet trayeur (6) est hors service, par exemple de par le fait qu'il a été enlevé d'un trayon par un coup de pied, ledit gobelet trayeur (6) étant disposé de manière amovible sur un support (32), ledit capteur (60) étant agencé à l'emplacement où le gobelet trayeur (6) est supporté ou à proximité de celui-ci, le capteur (60) étant disposé à proximité de l'élément de retrait (54), par l'intermédiaire duquel le gobelet trayeur (6) peut être tiré vers le support (32), et le capteur (60) envoie un signal vers un ordinateur lorsque l'élément de retrait (54) a entièrement effectué un retrait.

10. Installation selon la revendication 9, caractérisée en ce qu'un deuxième capteur (63) est disposé dans un siège conique (62) du support (32), et le côté de fond du gobelet trayeur (6) est conique de manière à correspondre au siège (62).

11. Installation selon la revendication 9 ou 10, caractérisée en ce que l'élément de retrait (54) comporte un élément souple (56), tel qu'une corde, qui est connecté au niveau d'une première extrémité à un gobelet trayeur (6), et au niveau de l'autre extrémité à un élément de retrait (55), tel qu'un vérin.

12. Installation selon la revendication 9, 10 ou 11, caractérisée en ce que le capteur (60) est actionné par l'extrémité de la tige de piston (58) du vérin (55) de l'élément de retrait (54).

13. Installation selon l'une quelconque des revendications 9 à 12, caractérisée en ce que le capteur (60) est constitué d'un micro-commutateur.

14. Installation selon l'une quelconque des revendications 9 à 13, caractérisée en ce qu'un troisième capteur (65) est agencé sur le gobelet trayeur (6).

15. Installation selon la revendication 14, caractérisée en ce que le capteur (65) est constitué d'un commutateur à mercure.

16. Installation comportant un système de traite d'animaux, muni d'un ou de plusieurs box de traite où un animal peut être trait, ledit système comportant un capteur (63), qui envoie un signal lorsqu'un gobelet trayeur (6) est hors service, par exemple de par le fait qu'il a été enlevé d'un trayon par un coup de pied, ledit gobelet trayeur (6) étant disposé de manière amovible sur un support (32), ledit capteur (60) étant agencé à l'emplacement où le gobelet trayeur (6) est supporté ou à proximité de celui-ci, le capteur (63) étant disposé dans un siège conique (62) du support (32), et le côté de fond du gobelet trayeur (6) est conique de manière à correspondre au siège (62).

17. Installation selon la revendication 16, caractérisée en ce qu'un deuxième capteur (60) est disposé à proximité d'un élément de retrait (54), par l'intermédiaire duquel le gobelet trayeur (6) peut être tiré en direction du support (32), et le deuxième capteur (60) envoie un signal vers un ordinateur lorsque l'élément de retrait (54) a entièrement effectué un retrait.

18. Installation selon la revendication 17, caractérisée en ce que l'élément de retrait (54) comporte un élément souple (56), tel qu'une corde, qui est connecté au niveau d'une première extrémité à un gobelet trayeur (6), et au niveau de l'autre extrémité à un élément de retrait (55), tel qu'un vérin.

19. Installation selon la revendication 17 ou 18, caractérisée en ce que le deuxième capteur (60) est actionné par l'extrémité de la tige de piston (58) du vérin (55) de l'élément de retrait (54).

20. Installation selon l'une quelconque des revendications 17 à 19, caractérisée en ce que le capteur (60) est constitué d'un micro-commutateur.

21. Installation selon l'une quelconque des revendications 16 à 20, caractérisée en ce qu'un troisième capteur (65) est agencé sur le gobelet trayeur.

22. Installation selon la revendication 21, caractérisée en ce que le capteur (65) est constitué d'un commutateur à mercure.

23. Installation selon l'une quelconque des revendications précédentes, caractérisée en ce que le système comporte un capteur de vide pouvant déterminer le vide existant dans la ligne de vide du gobelet trayeur (6), et qui envoie un signal vers l'ordinateur lorsqu'un gobelet trayeur (6) est déconnecté d'un trayon, après quoi l'ordinateur envoie un signal vers les moyens de coupure qui coupent la ligne de vide, pour que le vide du gobelet trayeur (6) soit enlevé.

24. Installation selon l'une quelconque des revendications précédentes, caractérisée en ce que le système comporte un robot de traite (5), par l'intermédiaire duquel les gobelets trayeurs (6) peuvent être connectés automatiquement à partir du support (32) aux trayons d'un animal à traire, peuvent être respectivement déconnectés de ceux-ci, et être ramenés en arrière sur le support (32) par l'intermédiaire de l'élément de retrait (54).
